**Europäisches Patentamt**

**European Patent Office**

**Office européen des brevets**

(19)

(11) Publication number : **0 470 737 A1**

## (12) EUROPEAN PATENT APPLICATION

(21) Application number : **91306845.8**

(22) Date of filing : **26.07.91**

(51) Int. Cl.⁵ : **G06F 12/08**

(30) Priority : **06.08.90 US 563220**

(43) Date of publication of application :
**12.02.92 Bulletin 92/07**

(84) Designated Contracting States :
**DE GB**

(71) Applicant : **NCR CORPORATION**
**World Headquarters**
**Dayton, Ohio 45479 (US)**

(72) Inventor : **Ellis, Jackson L.**
**700 E Drake Road, No. C5**
**Fort Collins, Colorado 80525 (US)**
Inventor : **Moussavi, Robert B.**
**13645 Tiverton Road**
**San Diego, California 92130 (US)**
Inventor : **King, Edward C.**
**4945 Norris Drive**
**Fremont, California 94536 (US)**

(74) Representative : **Robinson, Robert George**
**International Patent Department NCR Limited**
**915 High Road North Finchley**
**London N12 8QJ (GB)**

(54) **Cache memory operating method and structure.**

(57)    In a method for enhancing performance on cache overflows in a memory system, the address of the cache location where a first data element is to be transferred is provided. A second data element is transferred from the cache location to a latch (422), and the first data element is then transferred to the cache (16). The second data element may then be transferred to the system memory (12).

EP 0 470 737 A1

FIG. 2A

FIG. 2B

This invention relates to computer memory systems.

The performance of a computer system can be enhanced by the use of a memory hierarchy. For example, a three tiered memory can be constructed from low, medium, and high speed memories. A low speed memory may be a magnetic disk for low cost, bulk storage of data. A medium speed memory may be constructed from DRAMs for use as the computer system's main memory. A high speed memory may employ SRAMs for use as a processor cache memory. The theory behind memory hierarchy is to group code (instructions) and other data to be executed by the system processor in the highest speed memory. Since high speed memory is typically the most expensive memory available, economics dictate that it be relatively small. Main memory consisting of DRAMs is denser and less expensive than a cache memory with SRAMs, and can therefore be significantly larger than the cache memory.

During operation, instructions and other data are transferred from system memory to the cache memory in order to have quick access to the variables of the currently executing program. As additional data, not in the cache, is required, such data is transferred from the main memory by replacing selected data in the cache. Various replacement algorithms are utilized to determine which data is replaced.

An efficiently operating cache architecture exhibits a high ratio of "hits" to accesses. A "hit" occurs when data requested is in the cache. A number of factors influence the hit ratio. The dominant factor is the locality of reference of the code being executed. In other words, if the code is located in proximate physical locations in memory, the hit ratio will be higher than if the code is widely distributed throughout memory. Another factor influencing the hit ratio of a cache is the number of devices having access to the memory. If only a single bus master, such as the system processor, has access to the memory, the data stored in the cache can be controlled to achieve a reasonably high hit ratio. However, when more than a single bus master has access to the memory through the same cache, the cache can bounce back and forth between requests from the bus masters, greatly reducing the hit ratio. In other words, the cache is non-discriminatory, with the demands of the system processor and other bus masters affecting the cache equally. One operation can significantly impact the data make-up of the cache. For example, data cached in response to memory accesses from a non-host CPU bus master will overwrite data needed by the host processor.

Another factor affecting the hit ratio relates to the fact that both code and non-code data are cached. Blocks of data in the system memory are mapped into different physical locations in the cache. If each block of data in system memory may be mapped to only a single location, the cache is known as a direct mapped cache. Set associative mapping involves each block of data being mapped to more than a single location. For example, if each block of data may be mapped to either of two locations, the cache is known as two-way set associative. Irrespective of the number of locations available for a system memory block, when both code and non-code data are being cached, there will be overlap in their respective mappings. Thus, when both code and non-code data are cached, there can be significant thrashing which takes place as data is replaced in response to memory accesses.

An issue related to cache hits is whether or not a data element in a cache is valid and/or dirty. A data element is valid as long as no corresponding element in the system memory is more current. A data element in a cache is dirty if it is more current than a corresponding element in the system memory. A data element becomes dirty when a bus master writes the element to a cache and not to system memory.

A cache "overflow" is the condition created when a dirty and valid data element in a cache is overwritten by a bus master.

It is an object of the present invention to provide a method and structure for enhancing performance on cache overflows in a computer memory system.

Therefore, according to one aspect of the present invention, there is provided a method for operating a computer memory system including a system memory and a cache, characterized by the steps of: providing the address of the cache location where a first data element is to be transferred; transferring a second data element from said cache location to a latch; and transferring said first data element to said cache.

According to another aspect of the present invention, there is provided a computer memory system, characterized by: a system memory adapted to store data elements accessible by a bus master; bus means connecting said system memory with said bus master; a cache connected to said bus means; and a latch connected between said cache and bus means and adapted to absorb data overflows from said cache.

One embodiment of the present invention will now be described by way of example, with reference to the accompanying drawings, in which:-

Figure 1 is a block diagram of a high performance computer memory system; and

Figures 2A and 2B are a diagram of a cache according to one form of the present invention.

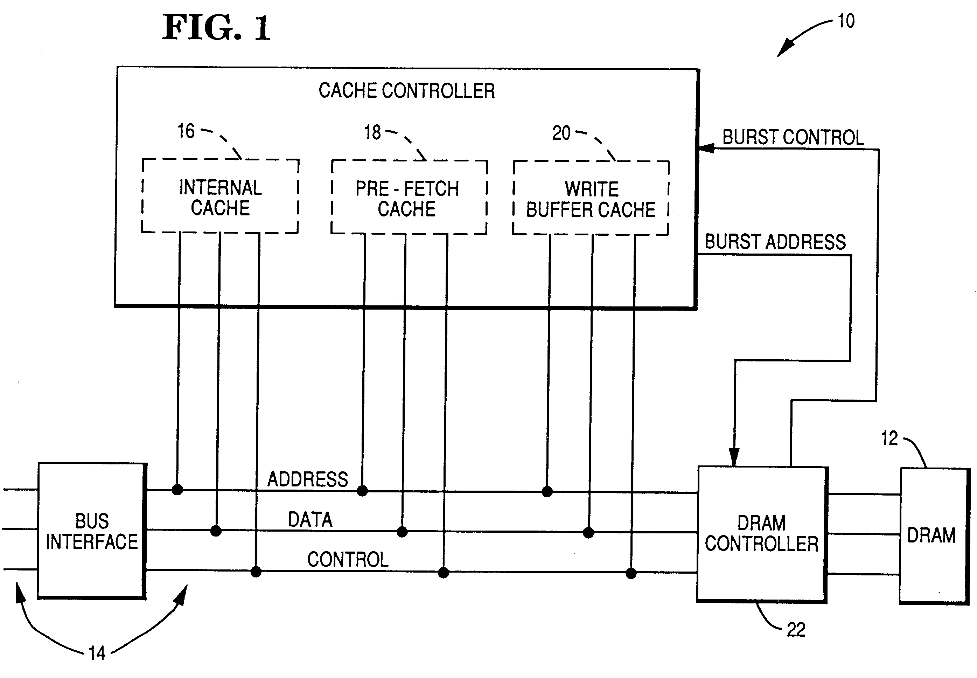

Figure 1 shows a block diagram of a computer memory system 10. System 10 includes a system memory 12 which in a preferred embodiment consists of dynamic random access memory (DRAM) chips. The data stored in memory 12 can be generally divided into code data (instructions) and non-code data. As used herein, the term "data" refers to information and includes both code data (instructions) and non-code data. Memory 12 is connected to other parts of a computer system (not shown) by a bus 14. Memory system 10 is designed for use with two or more bus masters, although it is operable with a single master. More particularly, it is designed for use with a host processor such as an Intel processor 386, 386sx or 486 in combination with other bus masters or devices which will compete with the host processor for access to memory system 10. Access to DRAM 12 is controlled by DRAM controller 22 which is located within bus 14.

Memory system 10 also includes an internal cache 16, a pre-fetch cache 18 and a write buffer cache 20, each connected to bus 14. In a preferred form, internal cache 16 is a 4K byte, four-way set associative cache, pre-fetch cache 18 is a 128 byte, direct-mapped cache, and write buffer cache 20 is a 128 byte, two-way set associative cache.

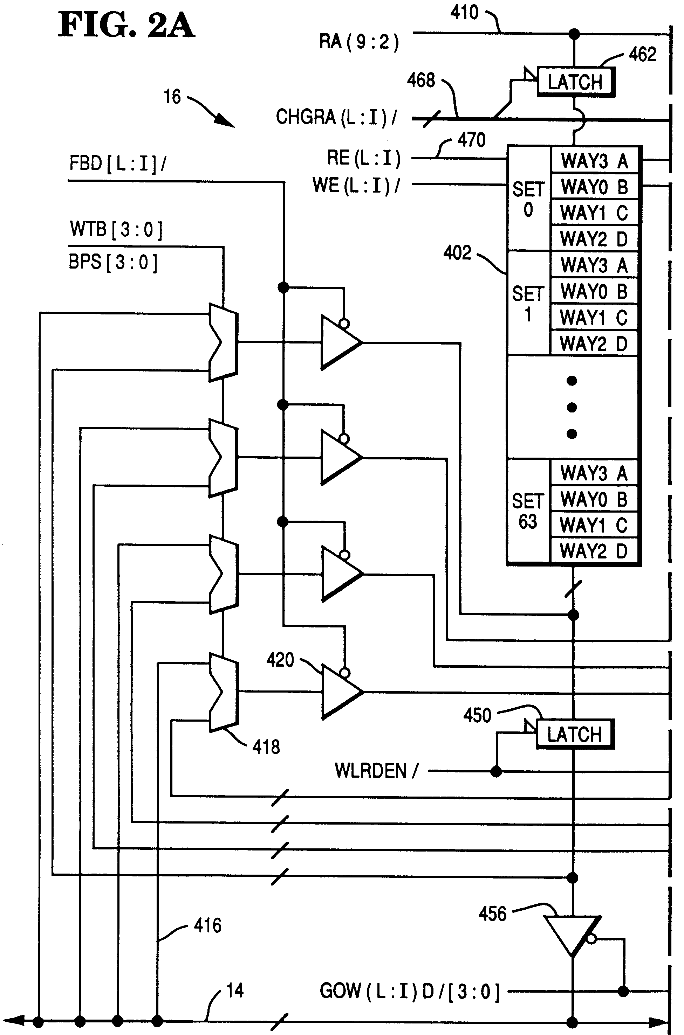

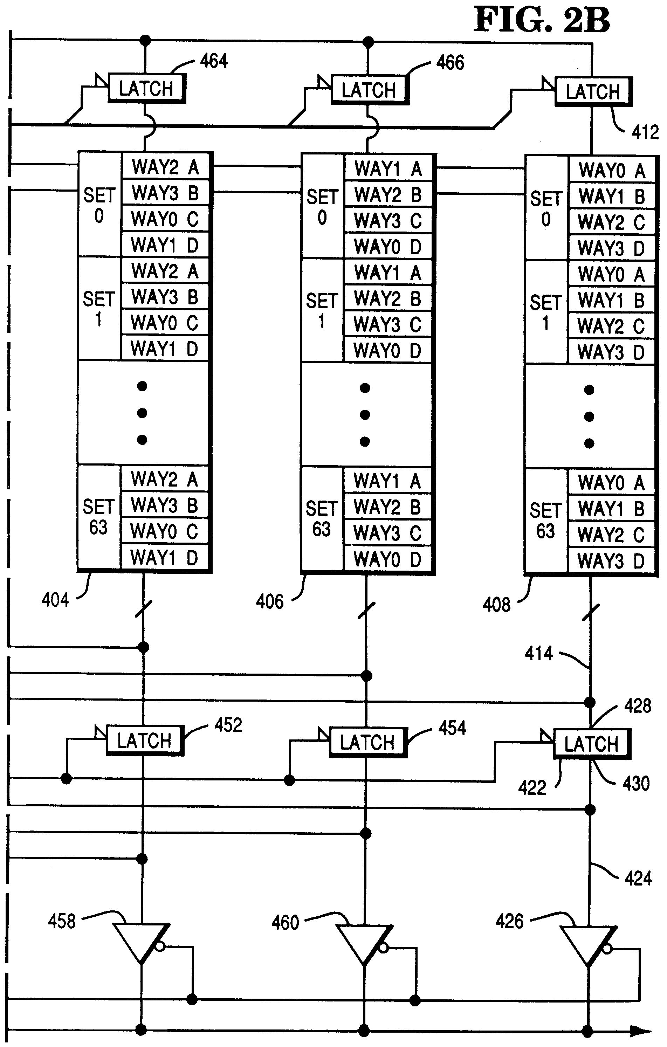

A feature of the caches is that their functionality may be varied depending upon the host processor type (386, 386sx or 486) utilized. However, certain features of the caches do not vary. For example, internal cache 16 holds data which is selected solely on the basis of memory accesses by the host processor. In other words, internal cache 16 is dedicated to the host processor and will not be affected by memory accesses by other bus masters. It will be appreciated that each of the caches is readable by any of the bus masters. Thus, even though cache 16 will not allow data writes therein based on memory accesses by other than the system processor, it will be read by another bus master if requested data happens to reside therein. It will further be appreciated that each of the caches snoops (observes) any data writes not intended for it in order to invalidate its contents upon snoop hits, thereby ensuring coherency. The structure of cache 16 and its operation on a cache overflow will be discussed more fully in reference to Figures 2A and 2B below.

Another immutable feature of the caches is that pre-fetch cache 18 contains solely code data pre-fetched from DRAM 12. Furthermore, it only pre-fetches code based on a memory access by the host processor. In operation, whenever the system processor requests code data not already in the pre-fetch cache, the next sequential 128 bytes of code are pre-fetched into cache 18 as a queue in anticipation of subsequent requests for code.

Write buffer cache 20 only buffers data to be written into DRAM 12. It is not merely a write buffer, but is a cache which, as mentioned above, can be read by any bus master. However, it will not cache data from DRAM 12.

An important feature of the caches is the separation of the functionality of each of the caches and the selective definition of those functions based on the processor type. By this insight, the present system is able to achieve or exceed the performance of a system utilizing a cache many times larger than the cumulative size of the subject caches. With respect to the selective definition of function based on processor type, for a system employing a 486 system processor, write buffer cache 20 buffers data writes by any bus master other than the system processor. For a system employing a 386 or 386sx system processor, internal cache 16 holds only code data and is a read only cache for the system processor, and write buffer cache 20 buffers data writes by any bus master including the system processor. The operational characteristics of the caches are defined through self configuration at power-on time based on information relating to the type of host processor present.

DRAM controller 22 supports fast page mode for accesses to DRAM 12. Fast page mode is a well known technique for speeding up accesses to DRAM by activating a row line in a memory page and then strobing sequential column lines to transfer data into or out of DRAM. DRAM 12 is divided into pages which contain either code or non-code data. A register associated with DRAM 12 is located either in DRAM 12 or DRAM controller 22 and holds the page address of a most recently accessed page. In effect, the system provides a bias towards code pages or non-code pages depending upon the type of processor connected to the system. For example, if the system processor is a 486, the address of the most recently accessed code address page is held in the register. In operation, both code and non-code data pages in DRAM 12 can be randomly accessed. If a code page is accessed on one cycle and a non-code page is accessed on the next cycle, the address of the code page is held in a register while the non-code page is accessed. Immediately after the non-code page access, the address in the register is used to reopen the code page. In contrast, if the system processor is a 386 or 386sx, the address of the most recently accessed non-code address page is held in the register. The combination of selective open page bias, fast page mode accesses and multiple caches provides increased system performance.

Write buffer cache 20 is a two-way set associative cache. The non-code data region of memory may be divided into three areas known as list, heap and stack. Data blocks in memory are reserved for the list, heap and stack, each of which has its own organization and purpose. For example, a stack is a set of data elements, only one of which can be accessed at a time. The list data is primarily read and generally not written to. In structured programs, a high percentage of writes occur to the stack with the second most data writes occurring to the heap. By proper assignment of the heap and stack data blocks in DRAM and mapping respective blocks to opposing sets in the two-way set associative cache, increased operational efficiency can be realized. Furthermore, an open page bias in the DRAM for non-code data will effectively be an open page bias for list data. In this manner, operational efficiency is further enhanced.

Figures 2A and 2B show more detail of cache 16 which is connected to bus 14. As noted previously, cache 16 is a four-way set associative cache, in a preferred embodiment, with four cache sets 400, 402, 404 and 406. For ease of understanding, the structure relating only to set 408 will now be described. Address information is provided on address lines 410 and held in latch 412. Data elements are transferred into and out of set 408 on data lines 414. Data being transferred into cache set 408 from bus 14 flows through data lines 416, multiplexer 418, tristate device 420 and data lines 414. Data being transferred out of cache set 408 flows through data lines 414, "pending" latch 422, data lines 424 and tristate device 426. Data lines 424 are also connected to another input of multiplexer 418. The input 428 of pending latch 422 admits a data element when enabled by the WLRDEN/ signal. An element stored in pending latch 422 is always available on its output 430. Tristate device 420 isolates bus 14 from cache set 408 when data is being transferred from cache set 408, and connects the output of multiplexer 418 to cache set 408 when data is being transferred to cache set 408. Similarly, tristate device 426 connects output 430 of pending latch 422 to bus 14 when a data element is to be transferred onto bus 14, and isolates bus 14 from pending latch 422 other times.

In a preferred embodiment, the data element stored at an addressable location in cache set 408 is a double word (four bytes). Thus, data lines 414, 424 and 416 all contain 32 data bit lines so that an entire double word may be transferred in parallel. The control lines which provide the WTB[3:0] and BPS[3:0] control signals to multiplexer 418 select from data lines 416 and 424 to select data bytes from either bus 14 or pending latch 422.

One form of the present invention also includes an interface buffer connected in or parallel to bus 14 between an accessing bus master and cache 16. Data elements written by the bus master pass through this interface buffer and may be temporarily held if the memory system is unable to immediately accept the write. For example, the interface buffer can hold a data element and provide it to the cache when the cache is available. This will be described more fully hereinafter.

The present invention involves a method for enhancing performance on an overflow of cache 16. A cache "overflow" is the condition of overwriting a "dirty" and "valid" data element in a cache. Each byte of a multiple byte data element in cache 16 has a bit or flag associated therewith which is set as "valid" when the data element is first written into the cache. Under certain operating conditions it may be necessary to invalidate one or more bytes in an element. For example, if a high speed transfer from a bus master directly to DRAM 12 (fast page mode) is performed, each cache will watch or "snoop" bus 14. If any data elements corresponding to those in cache 16 are updated or written into other caches or DRAM 12 in this manner, the respective bytes in such corresponding data element are set as "invalid" by removing the valid flag. A dirty bit is a flag which indicates that the cache written to has information that has not yet been written to memory, i.e., it represents the most up-to-date value of a given data element. The dirty bit is typically set when data is written into the cache from a bus master. "Dirty" data is "cleaned" by writing the data to the system memory.

Assume that cache 16 is full of data elements and that a bus master is writing a data element to memory system 10. If the data element is to be cached, the address of the cache location where the data element is to be transferred is provided to address bus 410. Prior to any data element transfer to cache 16, the data element presently residing in the subject cache location is transferred to a pending latch, for example, pending latch 422. The new data element from the bus master is then transferred into cache 16. If the transferred data element contains less than four bytes, the missing bytes to make up an entire double word are provided from pending latch 422 on a tag hit, and the missing bytes are simply marked as invalid on a tag miss. In other words, selected bytes of the new data element and old data element are combined in multiplexer 418 and provided to cache 16.

As noted above, each data element in cache 16 has valid and dirty flags associated therewith. Whenever a data element is to be transferred into cache 16 and the respective pending latch is clear, there is no delay in transferring the new data element by overwriting the old data element. However, if the old data element is dirty and has valid bytes, it must be transferred or written to the system memory, DRAM 12, before the next data element can be transferred into cache 16. In a preferred embodiment, the dirty and valid data element in pending latch 422 is transferred to DRAM 12 without delaying memory access requests for cache 16. There are various techniques that can be employed for making a transfer without delaying a memory access request. In a preferred embodiment, the memory system is synchronized to a clock cycle. The fastest data reads take two cycles (when there is a cache hit). When a request comes into the bus interface, predetermined address bits get routed directly to the caches over address bus 410 to start a memory access. This occurs in the first period, during which period the transaction bus 14 is idle. If there is a cache hit, the data element is placed on transaction bus 14 during the second cycle. When bus 14 is open (not used) in a subsequent cycle, the data element in pending latch 422 is transferred to DRAM 12 during this first period. By transferring the dirty and valid data element from pending latch 422 to DRAM 12 during open cycles, a memory access request from a bus master is not delayed.

The interface buffer noted previously also contributes to the ability of cache 16 to absorb data overflows from a bus master. More particularly, the interface buffer receives all writes to memory system 10. If an open cycle is not available for the transfer of the dirty and valid data element in pending latch 422 to DRAM 12 before a second data element is presented to cache 16, the interface buffer will hold the data element and the bus master will be provided with an acknowledgement. If a third data element is presented before pending latch 422 is cleaned, a wait state will be invoked. However, the present invention greatly improves on prior art systems where wait states were invoked on every overflow while the overwritten data was first written back to the system memory.

## Claims

1. A method for operating a computer memory system (10) including a system memory (12) and a cache (16), characterized by the steps of: providing the address of the cache location where a first data element is to be transferred; transferring a second data element from said cache location to a latch (422); and transferring said first data element to said cache (16).

2. A method according to claim 1, wherein said cache (16) is connected to said system memory (12) by bus means (14), characterized by the step of transferring said second data element from said latch (422) to said system memory (12) via said bus means (14) without delaying memory access requests for said cache (16).

3. A method according to claim 2, characterized by the step of monitoring said bus means (14) and transferring said second data element to said system memory (12) on an open cycle when said memory system (10) is not otherwise being accessed.

4. A method according to claim 2 or claim 3, wherein said bus means (14) is connected to a bus master, characterized by the steps of providing a dirty element flag for each data element in said cache (16) and setting said flag when a data element is written to said cache (16) from said bus master; and providing at least one valid flag for said each element in said cache (16), setting said valid flag when said element is first written to said cache (16), and removing said valid flag when at least part of said element has been updated other than in said cache (16).

5. A method according to claim 4, characterized by the step of transferring said second data element from said latch (422) to said system memory (12) if said dirty and valid flags are set.

6. A method according to any one of the preceding claims, wherein each data element contains multiple bytes, and wherein the transfer of said first data element to said cache (16) involves the transfer of selected bytes, characterized by the step of transferring selected bytes of said second data element from said latch (422) to said cache (16) when the selected bytes of said first data element are transferred.

7. A method according to any one of the preceding claims, characterized in that said first data element is provided to a buffer prior to being transferred to said cache (16).

8. A system memory (12) adapted to store data elements accessible by a bus master; bus means (14) connecting said system memory (12) with said bus master; a cache (16) connected to said bus means (14); and a latch (422) connected between said cache (16) and bus means (14) and adapted to absorb data overflows from said cache (16).

9. A computer memory system according to claim 8, characterized by a buffer connected in said bus means (14) between said bus master and said cache (16) and adapted to receive a data element from said bus master and provide said element to said cache (16).

10. A computer memory system according to claim 8 or claim 9, characterized in that said latch (422) has an input (428) for receiving a data element from said cache (16) and an output (430) for providing said element to said bus means (14) and by isolating means adapted to isolate said latch (422) from said bus means; data lines (424) connected between said output (430) and said cache (16); and a multiplexer (418) having inputs connected to said bus means (14) and said data lines and an output connected to said cache (16), said multiplexer (418) having control lines for selecting data lines (424) and lines from said bus means (14).

## FIG. 1

EP 0 470 737 A1

# FIG. 2A

# FIG. 2B

EP 0 470 737 A1

**European Patent Office**

**EUROPEAN SEARCH REPORT**

Application Number

EP 91 30 6845

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-310 446 (COMPUTER CONSOLES) | 1,2,4,5, 7-10 | G06F12/08 |
| Y | * column 7, line 44 - column 9, line 64 * <br> * column 11, line 28 - column 12, line 20; claims 1,2; figures 2,3 * <br>--- | 3,6 | |
| Y | US-A-4 157 586 (GANON ET AL.) <br> * column 2, line 46 - column 4, line 12; figure * <br>--- | 6 | |
| Y | 'intel Advance Information 82385 High Performance 32-bit Cache Controller' <br> October 1987 , INTEL , SANTA CLARA US <br> pages 1-11 <br> *pages 1,6,7* <br> * page 8, right column, line 19 - line 48 * <br> * page 11, left column, line 1 - line 31 * <br>----- | 3 | |
| | | | **TECHNICAL FIELDS SEARCHED (Int. Cl.5)** |
| | | | G06F |

The present search report has been drawn up for all claims

| Place of search | Date of completion of the search | Examiner |
|---|---|---|
| THE HAGUE | 14 OCTOBER 1991 | LEDRUT P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)